Europäisches Patentamt

European Patent Office

Office européen des brevets

(19)

(11) Veröffentlichungsnummer: **0 261 514 B1**

(12) **EUROPÄISCHE PATENTSCHRIFT**

(45) Veröffentlichungstag der Patentschrift: 29.05.91

(51) Int. Cl.⁵: **C03B 32/00**, C03B 35/20

(21) Anmeldenummer: 87113288.2

(22) Anmeldetag: 11.09.87

(54) **Verfahren und Vorrichtung zum Keramisieren von Glaskeramikscheiben.**

(30) Priorität: 20.09.86 DE 3632085

(43) Veröffentlichungstag der Anmeldung:
30.03.88 Patentblatt 88/13

(45) Bekanntmachung des Hinweises auf die
Patenterteilung:
29.05.91 Patentblatt 91/22

(84) Benannte Vertragsstaaten:
BE FR GB NL SE

(56) Entgegenhaltungen:
DE-C- 685 511
DE-C- 705 708
FR-A- 786 370
FR-A- 2 301 486
US-A- 3 809 542

(73) Patentinhaber: Schott Glaswerke
Hattenbergstrasse 10
W-6500 Mainz(DE)BE FR GB NL SE

Patentinhaber: Carl-Zeiss-Stiftung trading as
SCHOTT GLASWERKE
Hattenbergstrasse 10
W-6500 Mainz 1(DE)GB

(72) Erfinder: Neuhoff, Eckard
Otto-Nielk-Strasse 10
W-6204 Taunusstein-Bleidenstadt(DE)
Erfinder: Schröder-Gerlach, Friedrich-Georg
Bahnhofstrasse 58
W-6507 Ingelheim(DE)

(74) Vertreter: Dr. Fuchs, Dr. Luderschmidt
Dipl.-Phys. Seids, Dr. Mehler Patentanwälte
Abraham-Lincoln-Strasse 7
W-6200 Wiesbaden(DE)

**Beschreibung**

Die vorliegende Erfindung bezieht sich auf ein Verfahren und eine Vorrichtung zum Keramisieren von planen, durchsichtigen, im wesentlichen rechteckigen oder quadratischen Scheiben aus Glaskeramik, wobei die Scheiben während des Keramisierungsvorgangs an Aufhängepunkten in ihrem oberen Bereich über Aufhängungselemente an Haltepunkten einer Halte- und Transporteinrichtung vertikal aufgehängt sind.

Plane, durchsichtige Glaskeramikscheiben sind heutzutage von großem wirtschaftlichem Interesse, beispielsweise zur Verwendung als Ofensichtscheiben.

Dabei werden an das Aussehen und das Durchsichtvermögen durch diese Glaskermaikscheiben hohe Anforderungen gestellt.

Aus der FR-A-2 301 486 ist ein Verfahren zur Wärmebehandlung einer Platte aus glasartigem Material bekannt, wonach eine Glasplatte zum Entspannen oder Härten auf eine Temperatur oberhalb ihres Entspannungspunktes erhitzt wird. Die Glasscheibe wird dabei entlang ihres oberen Randes aufgehängt und entweder nur bis deutlich unterhalb der Erweichungstemperatur oder nur kurz bis zur Erweichungstemperatur erhitzt und dann sofort abgeschreckt. Beim Keramisieren einer "grünen" Glasscheibe ("grün" bedeutet ein Glas, das durch Tempern in eine Glaskeramik überführt werden kann) muß deutlich höher erhitzt werden, so daß vor dem Keramisieren das "grüne" Glas zu fließen beginnt. Nach dem beschriebenen Verfahren würde sich die Scheibe bei der während des Keramisierens auftretenden rückartigen Schrumpfung verziehen.

In der DE-C-705 708 wird eine weitere Vorrichtung zum Härten von Glasscheiben beschrieben, in der die Glasscheibe an mindestens drei Haltegliedern unter gleichmäßigem Zug aller Halteglieder mittels eines flexiblen Stahlseils aufgehängt wird. Die beschriebene Vorrichtung ist nicht zum Keramisieren von Glasscheiben geeignet, da ein flexibles Stahlseil bei den dabei über mehrere Stunden auftretenden Temperaturen von bis zu 1000°C angegriffen und zerstört wird. Außerdem muß bei der beschriebenen Aufhängeart mit einem Verziehen der Scheibe gerechnet werden.

Die FR-A-786 370 beschreibt ein Verfahren, wonach eine Glasplatte zum Härten von sich gegenüberliegenden U-förmigen Halterungen getragen wird. Die Haltevorrichtung ist sehr kompliziert gebaut und daher für eine laufende Produktion ungeeignet. Außerdem wird die eingelegte "grüne" Glasscheibe nicht genügend stabilisiert, so daß sich die Glasscheibe während eines Keramisierungsprozesses verziehen kann.

Bisher werden deshalb zur Keramisierung von planen, durchsichtigen Glaskeramikscheiben diese während des Keramisierungsvorganges auf Unterlagsplatten gelagert oder über Rollen transportiert. Während des Keramisierungsprozesses besteht dann ein inniger Kontakt zwischen dem durch die erforderliche Temperatur weich gewordenen Ausgangsmaterial und der Unterlage, so daß sich das Ausgangsmaterial der Unterlage anpaßt.

Dabei werden alle auf der Unterlagsplatte vorhandenen Unebenheiten und Verunreinigungen wie Steinchen, Staub u.ä. als Eindrücke und Markierungen auf der fertigen Glaskeramikscheibe "abgebildet". Da das zu keramisierende Material beim Keramisierungsvorgang um etwa 1 % schrumpft, entstehen zusätzlich prozeßinduzierte Kratzer und Streifen auf der fertigen Glaskeramikscheibe.

Aufgabe der vorliegenden Erfindung ist daher ein Verfahren zur Keramisierung von im wesentlichen rechteckigen oder quadratischen durchsichtigen Glaskeramikscheiben, welches beim Keramisieren prozeßinduzierte Oberflächenfehler weitestgehend unterdrückt und somit Glaskeramikplatten liefert, die eine bessere Durchsicht als die nach herkömmlichen Verfahren keramisierten Glaskeramikscheiben und eine erhöhte Festigkeit gegenüber diesen besitzen. Eine Steigerung der Ausbeute und eine Senkung des für das erfindungsgemäße Verfahren aufzuwendenden Energiebedarfs im Vergleich zu den bekannten Verfahren sollen mittels des neuen Verfahrens ebenfalls erzielt werden. Außerdem soll die Glaskeramikscheibe gegen Verwölbungen geschützt sein.

Diese Aufgabe wird dadurch gelöst, daß die Scheiben an ihren oberen Eckbereichen aufgehängt werden, wobei der Abstand der Haltepunkte größer ist als der Abstand der Aufhängungspunkte und in den Scheiben eine in Scheibenebene liegende horizontale Zugspannungskomponente erzeugt wird, die bei dem Keramisieren ein Durchsacken der Oberkante der Scheibe verhindert.

Das Verfahren wird so durchgeführt, daß die Scheiben in ihren oberen Eckbereichen aufgehängt werden. Hierbei werden die zu keramisierenden Scheiben so aufgehängt, daß Aufhängungselemente an zwei Aufhängepunkten, einer in der Nähe des linken oberen und einer in der Nähe des rechten oberen Eckbereiches der Glaskeramikscheibe liegend, befestigt werden und daß diese Aufhängungselemente und die dadurch eingeleiteten Zugkräfte schräg zur Vertikalen verlaufen (Schrägaufhängung).

Diese Aufhängungselemente sind wiederum an einer Halte- und Transporteinrichtung befestigt.

Für die erfolgreiche Durchführung des erfindungsgemäßen Verfahrens ist es entscheidend, daß die von den Aufhängungselementen auf die oberen Eckbereiche der zu keramisierenden Scheiben auszuübenden Kräfte so groß sind, daß die Oberkanten der Glaskeramikscheiben während des Keramisierungsprozesses am Durchsacken gehindert werden, da die Viskosität des Glaskeramikmaterials während dieses Prozesses zwischenzeitlich stark abnimmt. Dieses Durchsacken wird durch die schon beschriebene Schrägaufhängung der Glaskeramikscheiben an den Aufhängungselementen verhindert.

Eine besondere Ausführungsform des erfindungsgemäßen Verfahrens sieht vor, daß zusätzlich zu den von den Aufhängungselementen auf die Glaskeramikscheiben während des Keramisierungsprozesses übertragenen Kräfte in den oberen Ecken noch an den beiden unteren Eckbereichen der Scheibe Zugkräfte in die Scheibe zur Stabilisierung gegen Verwölbungen eingeleitet werden; hierzu werden in der schon oben beschriebenen Weise mittels Zangen, Schlingen oder ähnlichem an Seilen oder Ketten über Umlenkrollen hängende oder über Hebelgelenke wirkende Gewichte an den Scheibenrändern befestigt.

Die Vorrichtung zur Durchführung des erfindungsgemäßen Verfahrens enthält

- eine horizontal angeordnete Halte- und Transporteinrichtung und
- Aufhängungselemente, die an dieser Halte- und Transporteinrichtung in einem Abstand befestigt sind, der größer ist als die Einspannlänge der Scheiben.

Bei einer bevorzugten Ausführungsform der Erfindung erfolgt die Verbindung der Halte- und Transporteinrichtung mit den Glaskeramikscheiben über Zangen als Aufhängungselemente, in welche die Glaskeramikscheiben eingespannt werden oder indem in den Eckbereichen der Glaskeramikscheiben vor der Keramisierung Löcher angebracht werden und die Verbindung der Halte- und Transporteinrichtung mit den Glaskeramikscheiben über Schlingen, Schraubverbindungen o.ä., die in den Löchern befestigt sind, hergestellt wird.

Mit dem aufgezeigten erfindungsgemäßen Verfahren gelingt es, Glaskeramikscheiben herzustellen, die sich durch mehrere entscheidende Vorzüge gegenüber den nach herkömmlichen Verfahren hergestellten Scheiben auszeichnen:

1) Die fertigen Scheiben sind im wesentlichen frei von prozeßinduzierten Oberflächenverletzungen, die bei Verfahren gemäß Stand der Technik durch die Unterlage oder Steinchen, Staub u.ä. erzeugt werden.
Auch sind die Scheiben frei von Kratzern u.ä., die bei den herkömmlichen verfahren durch Schrumpfung des Glaskeramikmaterials um ca. 1 % während des Keramisierungsprozesses auf der Glaskeramikscheibenoberfläche entstehen.
2) Durch die Verminderung von Oberflächenverletzungen auf der Glaskeramikscheibe wird eine Erhöhung der Durchsicht, der Festigkeit und eine Steigerung der Ausbeute des Verfahrens erreicht, da das erfindungsgemäßen Verfahren wegen der erhöhten Festigkeit der keramisierten Scheiben eine niedrigere Ausschußrate besitzt.

3) Das erfindungsgemäße Verfahren ist mit geringerem Energieaufwand als die herkömmlichen Verfahren durchzuführen, da keine Energieaufwendung zur Aufheizung von irgendwelchen Unterlagen erforderlich ist.

Zur Veranschaulichung wird eine beispielhafte Ausführungsform des erfindungsgemäßen Verfahrens anhand der Zeichnung erläutert, in welcher

Figur 1    schematisch die Aufhängung einer Glaskeramikscheibe

Figur 2    die Aufhängung einer Glaskeramikscheibe mit zusätzlichen Gewichten

Figur 3    einen vertikalen Schnitt durch einen Ofen zur Durchführung des erfindungsgemäßen Verfahrens senkrecht zur Verbindungslinie der beiden Aufhängungspunkte und senkrecht zur Ebene der Glaskeramikscheibe zeigt.

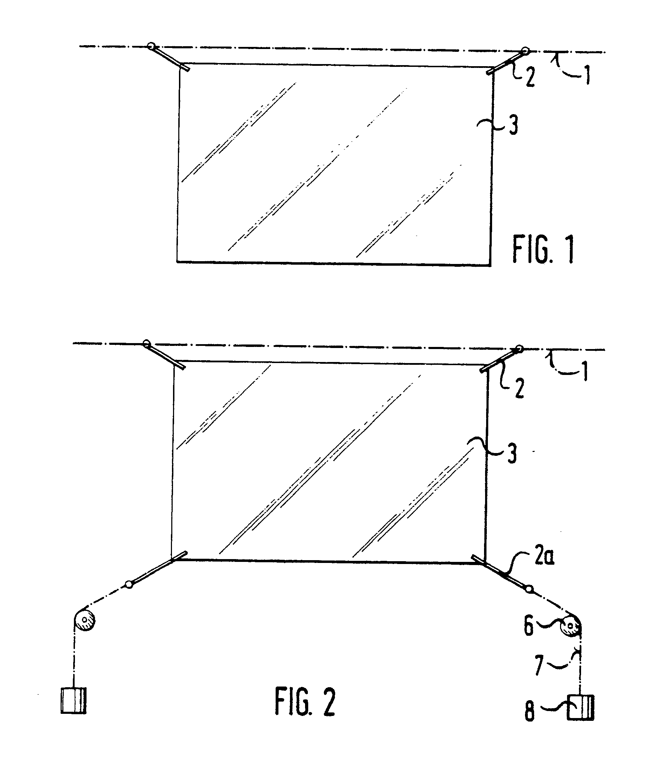

In Figur 1 ist die Aufhängung einer rechtwinkligen Glaskeramikscheibe 3 mit Zangen 2 als Aufhängungselemente dargestellt. Die Gestalt der Glaskeramikscheibe 3 ist nicht auf die Form eines Rechtecks beschränkt und die "Ecken" können auch abgerundet sein. Die Aufhängungselemente - im vorliegenden Ausführungsbeispiel sind dies die Zangen 2 - sind an der Halte- und Transporteinrichtung befestigt. Die Halt- und Transporteinrichtung der in der Figur 1 verkörperten Ausführungsform besteht aus einer Kette 1, die in ihrer Längsrichtung derart gespannt ist, daß über die Zangen 2 auf die oberen Eckbereiche der aufgehängten Glaskeramikscheibe 3 die zur Verhinderung des Durchsackens der Oberkante der Glaskeramikscheibe 3 erforderlichen Kräfte schräg zur Schwerkraft übertragen werden.

Figur 2 gibt die Befestigung von Gewichten, die auf die unteren Eckbereiche der aufgehängten Scheibe Zusatzkräfte übertragen sollen, wieder. Über Zangen 2a, Schlingen, Schraubverbindungen o.ä. hängen an über Umlenkrollen 6 geführten Ketten 7, Seilen oder dgl. Zusatzgewichte 8.

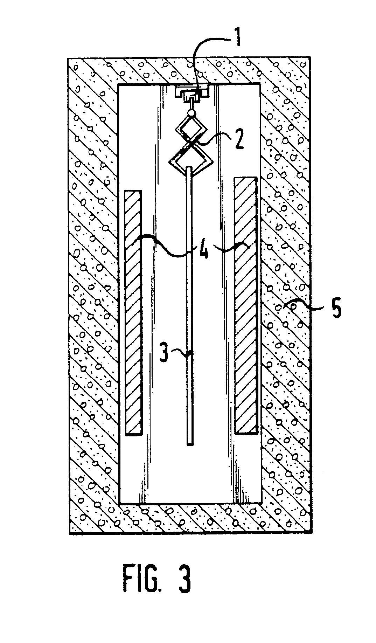

Aus Figur 3 geht ein Aufbau eines Ofens zur senkrechten Keramisierung von Glaskeramikscheiben mit darin aufgehängter Glaskeramikscheibe 3 hervor. Der Ofen besteht aus einer massiven Ofenmauerung 5, an deren Seitenwänden auf der Innenseite über einen Teil der Höhe der Seitenwände sich erstreckende Heizelemente 4 angeordnet sind, deren Höhe im vorliegenden Fall ungefähr der senkrechten Ausdehnung der Glaskeramikscheibe 3 entspricht. Die Glaskeramikscheibe 3 ist mit Zangen 2 als Aushängungselement an der Kette 1 aufgehängt.

In den Figuren 1 und 2 ist jeweils nur eine Scheibe dargestellt. Es liegt selbstverständlich auch im Rahmen der vorliegenden Erfindung, mehrere Glaskeramikscheiben in Längsrichtung hintereinander oder auch mehrere Scheiben, gegebenenfalls parallel, nebeneinander aufzuhängen.

**Ansprüche**

1. Verfahren zum Keramisieren von planen, durchsichtigen, im wesentlichen rechteckigen oder quadratischen Scheiben aus Glaskeramik, wobei die Scheiben während des Keramisierungsvorgangs an Aufhängepunkten in ihrem oberen Bereich über Aufhängungselemente (2) an Haltepunkten einer Halte- und Transporteinrichtung (1) vertikal aufgehängt sind, dadurch gekennzeichnet, daß die Scheiben an ihren oberen Eckbereichen aufgehängt werden, wobei der Abstand der Haltepunkte größer ist als der Abstand der Aufhängungspunkte und in den Scheiben eine in Scheibenebene liegende horizontale Zugspannungskomponente erzeugt wird, die bei dem Keramisieren ein Durchsakken der Oberkante der Scheibe verhindert.

2. Verfahren nach Anspruch 1, dadurch gekennzeichnet, daß zusätzlich zur Aufhängung noch an den unteren Eckbereichen der Scheibe durch Umlenkung von Gewichtskräften horizontale Zugkräfte in die Scheibe eingeleitet werden , um bei dem Keramisieren die Scheibe gegen Verwölbungen zu stabilisieren.

3. Vorrichtung zur Durchführung des Verfahrens gemäß Anspruch 1, gekennzeichnet durch
   - eine horizontal angeordnete Halte- und Transporteinrichtung (1) und
   - Aufhängungselemente (2), die an dieser Halte- und Transporteinrichtung (1) in einem Abstand befestigt sind, der größer ist als die damit eingespannte Länge der Scheiben.

4. Vorrichtung nach Anspruch 3, dadurch gekennzeichnet, daß die Halte- und Transporteinrichtung eine Kette (1) ist.

5. Vorrichtung nach Anspruch 3 oder 4, dadurch gekennzeichnet, daß diese Aufhängungselemente zur Aufhängung von Glasscheiben geeignete Zangen (2) sind.

6. Vorrichtung nach Anspruch 3 oder 4, dadurch gekennzeichnet, daß diese Aufhängungselemente Schlingen aus einem geeigneten Material sind.

7. Vorrichtung nacheinander Ansprüche 3 bis 6, dadurch gekennzeichnet, daß an dieser Halte- und Transporteinrichtung (1) Umlenkrollen (6) und/oder Kipphebelelemente angebracht sind, die zusätzliche Krafteinleitungen an den unteren Eckbereichen der Scheibe durch Umlenkung von Gewichtskräften ermöglichen.

**Claims**

1. A process for ceramizing planar, transparent, substantially rectangular or square sheets of glass-ceramic material, the sheets being suspended vertically during the ceramizing process on suspension points in the upper region thereof by way of suspension elements (2) on holding points of a holding and conveying device (1), **characterized in that** the sheets are suspended at their upper corner areas, the distance between the holding points being greater than the distance between the suspension points, and a horizontal tensile stress component, which lies in the plane of the sheets and which prevents the upper edge of the sheets sagging during the ceramizing, being produced in the sheets.

2. A process according to Claim 1, **characterized in that,** in addition to the suspension, horizontal tensile stresses are introduced into the sheet at the lower corner areas of the sheet by the deflexion of forces of gravity, in order to stabilize the sheet against bulges during the ceramizing.

3. Apparatus for performing the process according to Claim 1, **characterized by**
   - a horizontally arranged holding and conveying device (1), and
   - suspension elements (2), which are attached to the said holding and conveying device (1) at a spacing which is greater than the length of the sheets clamped thereby.

4. Apparatus according to Claim 3, **characterized in that** the holding and conveying device is a chain (1).

5. Apparatus according to Claim 3 or 4, **characterized in that** the said suspension elements are tongs (2) suitable for the suspension of glass sheets.

6. Apparatus according to Claim 3 or 4, **characterized in that** the said suspension elements are loops of a suitable material.

7. Apparatus according to any one of Claims 3 to 6, **characterized in that** deflexion rollers (6) and/or rocker elements, which allow additional force to be introduced at the lower corner areas of the sheet by the deflexion of forces of gravity, are arranged or the said holding and conveying device (1).

## Revendications

1. Procédé pour la céramisation de plaques Vitrocéramiques planes, transparentes, essentiellement carrées ou rectangulaires, les plaques étant suspendues verticalement pendant le processus de céramisation en des points de suspension à leur partie supérieure par l'intermédiaire d'éléments de suspension (2) à des points d'accrochage d'un dispositif d'accrochage et de transport (1), **caractérisé** en ce que les plaques sont suspendues dans la zone de leurs coins supérieurs, la distance des points d'accrochage étant supérieure à la distance des points de suspension et une composante de contraintes de traction horizontale située dans le plan de la plaque, étant produite dans la plaque, qui empêche un creusement du bord supérieur de la plaque durant la céramisation.

2. Procédé selon la revendication 1, **caractérisé** en ce que, en plus de la suspension, des forces de traction horizontales sont introduites dans la plaque, dans la zone des coins inférieurs de la plaque par déviation des forces de pesanteur, afin de stabiliser la plaque contre des déformations par cintrage lors de la céramisation.

3. Dispositif pour la mise en oeuvre du procédé selon la revendication 1, **caractérisé** par
   - un dispositif d'accrochage et de transport (1) disposé horizontalement et
   - des éléments de suspension (2) qui sont fixés sur ce dispositif d'accrochage et de transport (1) à une distance qui est supérieure à la distance entre les points de suspension des plaques.

4. Dispositif selon la revendication 3, **caractérisé** en ce que le dispositif d'accrochage et de transport est une chaîne (1).

5. Dispositif selon la revendication 3 ou 4, **caractérisé** en ce que lesdits éléments de suspension pour la suspension des plaques de verre sont des pinces (2) adaptées à cet effet.

6. Dispositif selon la revendication 3 ou 4, **caractérisé** en ce que lesdits éléments de suspension sont des élingues en un matériau adapté.

7. Dispositif selon l'une des revendications 3 à 6, **caractérisé** en ce que ledit dispositif d'accrochage et de transport (1) est muni de galets (6) et/ou d'éléments de levier oscillants, qui permettent d'introduire des forces supplémentaires dans la zone des coins inférieurs de la plaque par déviation des forces de pesanteur.

FIG. 1

FIG. 2

FIG. 3